# DEMANDE DE BREVET EUROPEEN

(11) **EP 4 366 252 A1**
(43) Date de publication de la demande: **08.05.2024**
(21) Numéro de dépôt: 23205826.3
(22) Date de dépôt: 25.10.2023
(51) Int. Cl.: H04L 12/66, H04W 40/04, H04W 40/22, H04W 40/24, H04W 84/12, H04W 88/04, H04W 88/16

(54) **PROCÉDÉ ET DISPOSITIF DE GESTION DE MESSAGES DIFFUSÉS DANS UN RÉSEAU LOCAL**

(30) Priorité: 02.11.2022 FR 2211405
(71) Demandeur: SAGEMCOM BROADBAND SAS, 92270 Bois-Colombes (FR)
(72) Inventeur: ALARCON, Laurent, 92500 Rueil Malmaison (FR); LE ROUX, Sylvain, 92500 Rueil Malmaison (FR)
(74) Mandataire: Cabinet Le Guen Maillet

(57) **Abrégé**

La présente invention concerne un procédé et un dispositif de gestion de messages diffusés dans un réseau local comprenant des noeuds permettant une extension de couverture de communication sans fil et des stations, les noeuds étant reliés entre eux par un sous-réseau d'acheminement, au moins un noeud émettant au moins un réseau sans-fil appelé réseau frontal sur lequel se connectent les stations, le réseau local comprenant un sous-réseau primaire et un sous-réseau secondaire, le sous-réseau primaire étant un sous-réseau auquel appartiennent les liens du réseau d'acheminement et les noeuds, le sous-réseau secondaire étant un sous-réseau composé d'au moins une station et qui est isolé du reste du réseau local par un réseau virtuel. Selon l'invention, un noeud apte à appliquer des règles de filtrage :
- commande (E300) une analyse de la topologie du réseau local,
- détermine (E301) à partir de la topologie du réseau local des règles de filtrage à appliquer,
- applique (E302) les règles de filtrages déterminées sur les paquets diffusés comportant au moins une information identifiant le réseau virtuel.

## Description

### DOMAINE TECHNIQUE

La présente invention concerne un procédé et un dispositif de gestion de messages diffusés dans un réseau local comprenant un sous-réseau dit sous-réseau primaire et un ou plusieurs sous-réseau(x) dit sous-réseau(x) secondaire(s), le réseau local comprenant des noeuds permettant une extension de couverture de communication sans-fil.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des noeuds de communication, appelés simplement ci-après noeuds, interconnectés grâce à un sous-réseau d'acheminement ou d'amenée (« backhaul subnetwork » en anglais) et mettent tous à disposition un même réseau local sans-fil WLAN (« Wireless Local Area Network ») en anglais.

Les noeuds du sous-réseau d'acheminement sont connectés les uns aux autres grâce à une structure maillée en forme d'arbre, un noeud pouvant alors servir de relais entre deux autres noeuds du sous-réseau d'acheminement. Les noeuds du sous-réseau d'acheminement sont ainsi interconnectés grâce à des liaisons filaires, par exemple de type Ethernet, ou à des liaisons sans-fil. Les noeuds du sous-réseau d'acheminement sont connectés entre eux par un réseau qu'on appelle aussi « Réseau BackHaul » pouvant être soit filaire, soit sans fil, ou une combinaison des deux.

Chaque noeud du sous-réseau d'acheminement émet éventuellement au moins un réseau sans fil qu'on appelle « Réseau FrontHaul » ou réseau frontal sur lequel se connectent les stations de l'utilisateur. Ce réseau frontal, s'il utilise la technologie Wi-Fi / IEEE 802.11, est l'équivalent de ce qui se nomme BSS (Basic Service Set).

Au moins un des noeuds du sous-réseau d'acheminement est connecté à une passerelle résidentielle « gateway » en anglais qui fournit l'accès au réseau Internet. La passerelle résidentielle peut aussi faire partir du sous-réseau d'acheminement.

Actuellement, lorsqu'une station, appelée aussi client, est connectée par une liaison filaire telle qu'Ethernet, la station peut recevoir des données qui ne lui sont pas destinées.

En plus des risques de sécurité (divulgation d'information), cette situation peut également entraîner des problèmes de fonctionnement. En effet, certains équipements n'opèrent pas correctement le filtrage à la réception des messages et traitent de manière équivalente les messages du sous-réseau primaire et ceux provenant d'un sous-réseau secondaire.

Un tel équipement peut donc par exemple recevoir indifféremment des configurations de type IPv6 destinées respectivement à chacun des deux sous-réseaux. Ces différentes configurations peuvent provoquer pour un client une perte de l'accès au sous-réseau primaire, le client retenant la configuration correspondant au sous-réseau secondaire.

### EXPOSE DE L'INVENTION

L'invention proposée permet de garantir que seuls les destinataires légitimes reçoivent un message, par exemple un message diffusé, selon le critère des VLANs appliqués à ces messages.

À cette fin, selon un premier aspect, un mode de réalisation propose un procédé de gestion de messages diffusés dans un réseau local comprenant des noeuds permettant une extension de couverture de communication sans fil et des stations, les noeuds permettant une extension de couverture étant reliés entre eux par un sous-réseau d'acheminement, au moins un noeud permettant une extension de couverture de communication sans fil émettant au moins un réseau sans-fil, appelé réseau frontal, sur lequel se connectent les stations, le réseau local comprenant un sous-réseau primaire et un sous-réseau secondaire, le sous-réseau primaire étant un sous-réseau auquel appartiennent les liens du réseau d'acheminement et les noeuds, le sous-réseau secondaire étant un sous-réseau composé d'au moins une station et qui est isolé du reste du réseau local par un réseau virtuel, caractérisé en ce que le procédé comporte les étapes, exécutées par un noeud apte à appliquer des règles de filtrage, de :
- commande d'une analyse de la topologie du réseau local,
- détermination à partir de la topologie du réseau local de règles de filtrage à appliquer,
- application des règles de filtrage déterminées sur les paquets diffusés comportant au moins une information identifiant le réseau virtuel.

L'invention concerne aussi un dispositif de gestion de messages diffusés dans un réseau local comprenant des noeuds permettant une extension de couverture de communication sans fil et des stations, les noeuds permettant une extension de couverture étant reliés entre eux par un sous-réseau d'acheminement, au moins un noeud permettant une extension de couverture de communication sans fil émettant au moins un réseau sans-fil appelé réseau frontal sur lequel se connectent les stations, le réseau local comprenant un sous-réseau primaire et un sous-réseau secondaire, le sous-réseau primaire étant un sous-réseau auquel appartiennent les liens du réseau d'acheminement et les noeuds, le sous-réseau secondaire étant un sous-réseau composé d'au moins une station et qui est isolé du reste du réseau local par un réseau virtuel, caractérisé en ce que le dispositif est compris dans un noeud apte à appliquer des règles de filtrage et comporte :
- des moyens de commande d'une analyse de la topologie du réseau local,
- des moyens de détermination à partir de la topologie du réseau local de règles de filtrage à appliquer,
- des moyens d'application des règles de filtrage déterminées sur les paquets diffusés comportant au moins une information identifiant le réseau virtuel.

Ainsi, la présente invention permet de garantir que seuls les destinataires légitimes reçoivent un message diffusé.

Selon un mode particulier, l'analyse de la topologie du réseau comporte une détermination de la présence d'un noeud inapte à appliquer les règles de filtrage et/ou de la présence d'un commutateur connecté au sous-réseau d'acheminement.

Selon un mode particulier, l'application des règles de filtrage à appliquer se décompose en sous-étapes de :
- suppression des paquets de diffusion comportant un identifiant d'un sous-réseau secondaire sur les interfaces réseau primaire du réseau frontal.
- suppression des paquets de diffusion comportant une information identifiant un sous-réseau secondaire sur les interfaces du sous-réseau d'acheminement reliées à un commutateur et/ou à un noeud incompatible,
- transformation des paquets de diffusion à destination d'équipements d'un sous-réseau secondaire pour lesquels le chemin depuis l'émetteur passe par un commutateur ou un noeud incompatible en paquets unicast.

Selon un mode particulier, si le réseau local ne comporte que des noeuds aptes à appliquer les règles de filtrage et aucun commutateur, chaque noeud compatible supprime les paquets de diffusion possédant une information identifiant un sous-réseau secondaire sur les interfaces primaires du sous-réseau d'acheminement.

Selon un mode particulier, l'application des règles de filtrage à appliquer se décompose en sous-étape de :
- transformation des messages diffusés émis dans les sous-réseaux secondaires en messages unicast au niveau de chaque noeud compatible.

Selon un mode particulier, la détermination de la topologie du réseau se décompose en sous-étapes de :
- génération d'une table représentant le sous-réseau auquel appartient chaque interface et chaque pont d'un noeud,
- génération d'une table représentant la liste des équipements du réseau local,
- génération d'une table représentant le type de chaque équipement du réseau local,
- génération d'une table permettant de déterminer l'interface de connexion de chaque équipement du réseau local,
- génération d'une table décrivant pour chaque interface son appartenance au sous-réseau d'acheminement ou au sous-réseau frontal,
- génération d'une table décrivant pour chaque équipement s'il est physiquement lié à une interface du réseau frontal,
- génération d'une table décrivant pour chaque station si elle est connectée physiquement à une interface d'un noeud.

Selon un mode particulier, le procédé est exécuté par un noeud appelé passerelle résidentielle qui fournit un accès à un réseau Internet.

Un mode particulier concerne aussi un produit programme d'ordinateur. Il comprend des instructions pour implémenter, par un équipement, le procédé selon l'un des modes de réalisation précédents, lorsque ledit programme est exécuté par un processeur de l'équipement.

Un mode particulier concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un exemple de réseau local dans un mode de réalisation ;
[Fig. 2] illustre schématiquement l'architecture d'un noeud selon un mode de réalisation ;
[Fig. 3a] illustre un exemple d'un procédé exécuté selon un mode de réalisation ;
[Fig. 3b] illustre un exemple d'un procédé de détermination d'une topologie du réseau local selon un mode de réalisation ;
[Fig. 4] illustre un exemple d'une table représentant le sous-réseau auquel appartiennent chaque interface et chaque pont d'un noeud ;
[Fig. 5] illustre un exemple d'une table représentant la liste des équipements du réseau local ;
[Fig. 6] illustre un exemple d'une table représentant le type de chaque équipement du réseau local ;
[Fig. 7] illustre un exemple d'une table permettant de déterminer l'interface de connexion de chaque équipement du réseau local ;
[Fig. 8] illustre un exemple d'une table décrivant pour chaque interface son appartenance au sous-réseau d'acheminement ou au sous-réseau frontal ;
[Fig. 9] illustre un exemple d'une table décrivant pour chaque équipement s'il est physiquement lié à une interface du réseau frontal ;
[Fig. 10] illustre un exemple d'une table décrivant pour chaque station si elle est connectée physiquement à une interface d'un noeud ;
[Fig. 11] illustre un exemple d'une table décrivant la topologie du réseau local ;
[Fig. 12] illustre un exemple d'un algorithme d'application de règles de filtrage selon un mode de réalisation.

### EXPOSE DETAILLE DE MODES DE REALISATION

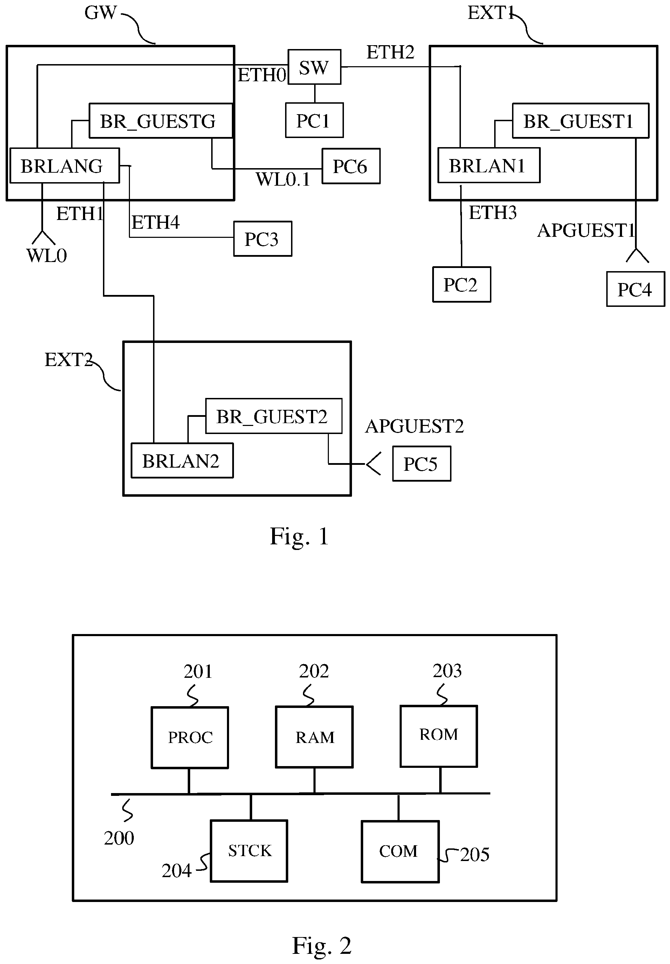

La Fig. 1 illustre un exemple de réseau local dans un mode de réalisation.

Le réseau local comporte trois noeuds GW, EXT1 et EXT2. Le noeud GW est par exemple une passerelle GW résidentielle « gateway » en anglais qui fournit l'accès à un réseau étendu, comme par exemple le réseau Internet.

Les noeuds EXT1 et EXT2 sont par exemple des systèmes d'extension de couverture de communication sans-fil qui sont utilisés afin d'augmenter la portée du réseau local en coordonnant plusieurs points d'accès AP (« Access Point » en anglais) répartis. Ces différents points d'accès AP sont intégrés aux noeuds qui sont interconnectés grâce à un sous-réseau d'acheminement ou d'amenée (« backhaul subnetwork » en anglais) et mettent tous à disposition un même réseau local sans-fil WLAN en anglais.

Le noeud EXT1 est par exemple un noeud compatible selon des modes de réalisation et le noeud EXT2 est par exemple un noeud incompatible. Un noeud compatible est un noeud apte à, ou adapté pour, effectuer les règles de filtrage définies selon des modes de réalisation. Un noeud incompatible est un noeud qui est inapte, ou qui n'est pas adapté, à effectuer les règles de filtrage définies selon des modes de réalisation.

Il est entendu ci-après par le terme « noeud », un équipement offrant des capacités de connectivité et constitutif du réseau local maillé.

Le réseau local comporte une pluralité de stations PC1, PC2, PC3, PC4, PC5 et PC6.

Il est entendu ci-après par le terme « station », un équipement fixe ou mobile utilisant les ressources du réseau local maillé via l'intermédiaire des noeuds dudit réseau local. Une station est par exemple un terminal mobile sans fil, une enceinte sans fil, un ordinateur personnel.

Le noeud GW comporte un pont BRLANG, aussi appelé « bridge » en anglais, appartenant au sous-réseau primaire et un pont BR_GUESTG appartenant au sous-réseau secondaire. Le sous-réseau primaire est un sous-réseau auquel appartiennent les liens du réseau d'acheminement et les points d'accès, il est unique dans le réseau local.

Le sous-réseau secondaire est un sous-réseau composé d'un ou plusieurs équipements clients et qui est isolé du reste du réseau local par un réseau virtuel (VLAN). Un réseau local peut contenir aucun, un ou plusieurs sous-réseaux secondaires.

Les ponts BRLANG et BR_GUESTG sont interconnectés, ce qui permet un échange de flux de données entre eux.

Les interfaces ETH0, ETH1, ETH4 et WLO sont reliées au pont BRLANG et sont des interfaces de type primaire. Dans cet exemple non limitatif, le préfixe ETH désigne une interface de communication via réseau filaire de typer Ethernet, et le préfixe WL désigne une interface de communication via un réseau sans-fil ou « wireless » en anglais. L'interface WL0.1 est reliée au pont BR_GUESTG et est une interface de type secondaire. La station PC3 est reliée au pont BRLANG par l'intermédiaire de l'interface ETH4.

La station PC6 est reliée au pont BR_GUESTG par l'intermédiaire de l'interface WL0.1. Le noeud EXT1 comporte un pont BRLAN1 appartenant au sous-réseau primaire et un pont BR_GUEST1 appartenant au sous-réseau secondaire.

Le noeud EXT1 est un noeud compatible.

Les ponts BRLAN1 et BR_GUEST1 sont interconnectés afin de pouvoir échanger des données.

Les interface ETH2 et ETH3 sont reliées au pont BRLAN1 et sont des interfaces de type primaires.

L'interface APGUEST1 est reliée au pont BR_GUEST1 et est une interface de type secondaire.

La station PC2 est reliée au pont BRLAN1 par l'intermédiaire de l'interface ETH3.

La station PC4 est reliée au pont BR_GUEST1 par l'intermédiaire de l'interface APGUEST1.

Un commutateur SW est relié aux interfaces ETH0 et ETH2 et une station PC 1 est reliée au commutateur SW. Dans un exemple, ce commutateur SW est un commutateur de paquets dit « switch » en anglais.

Le noeud EXT2 comporte un pont BRLAN2 appartenant au sous-réseau primaire et un pont BR_GUEST2 appartenant au sous-réseau secondaire.

Le noeud EXT2 est un noeud incompatible.

Les ponts BRLAN2 et BR_GUEST2 sont connectés à l'interface ETH1.

La station PC5 est reliée au pont BR_GUEST2 par l'intermédiaire de l'interface APGUEST2.

La Fig. 2 illustre schématiquement l'architecture d'un noeud selon un mode de réalisation. Selon l'exemple d'architecture matérielle représenté à la Fig. 2, l'un des noeuds ou plusieurs des noeuds GW, EXT1 et EXT2, comprennent, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au noeud de communiquer avec les équipements du réseau local.

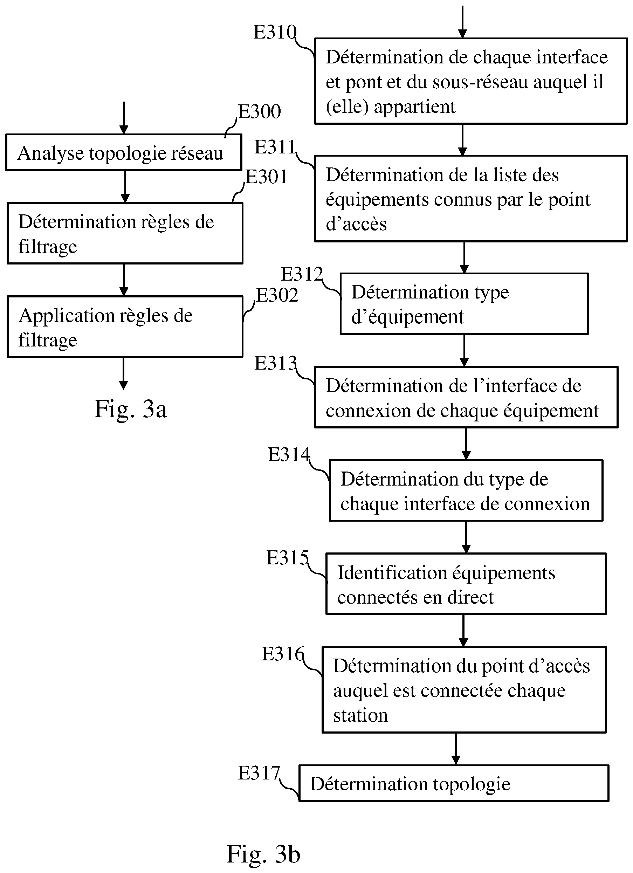

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le noeud est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec les Figs. 3.

Le procédé décrit ci-après en relation avec les Figs. 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le noeud comprend de la circuiterie électronique configurée pour mettre en oeuvre les procédés décrits en relation avec les Figs. 3.

La Fig. 3a illustre un exemple d'un procédé exécuté selon un mode de réalisation.

A l'étape E300, un noeud, par exemple le noeud GW commande une analyse de la topologie du réseau local et détermine si au moins un noeud du réseau local est incompatible ou si un commutateur est présent dans le réseau local. Dans un mode de réalisation dans lequel le standard EasyMesh est utilisé, les équipements compatibles ajoutent dans un message, par exemple de type « Auto-Configuration Search » une information de type « TLV vendor-specific » dont la présence indique la compatibilité dudit équipement avec le procédé ici décrit. L'absence de cette information dans un message caractérise ainsi l'équipement l'ayant émis comme non compatible.

A l'étape E301, le noeud GW détermine, à partir de la topologie du réseau local, des règles de filtrage à appliquer.

A l'étape E302, le noeud GW commande l'application des règles de filtrage déterminées. La Fig. 3b illustre un exemple d'un procédé de détermination d'une topologie du réseau local selon un mode de réalisation.

A l'étape E310, le noeud GW détermine les différents ponts dont il dispose, les interfaces qui leur sont connectées et le type de sous-réseau auquel ils appartiennent.

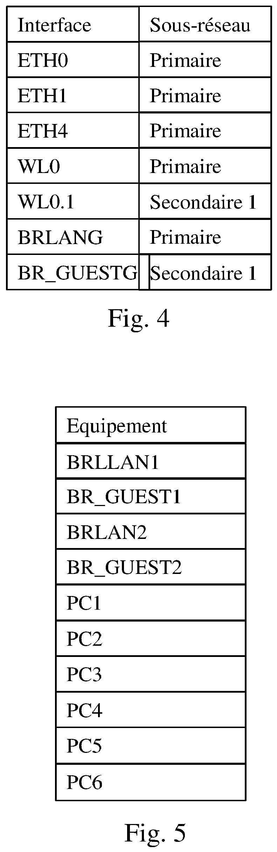

Selon l'exemple de la Fig. 4, le noeud GW comporte deux ponts BRLANG et BR_GUESTG et cinq interfaces réseau ETH0, ETH1, ETH4, WL0 et WL0.1.

Le pont BRLANG appartient au sous-réseau primaire et le pont BR_GUESTG appartient au sous-réseau secondaire.

Les interfaces ETH0, ETH1, ETH4 et WL0 sont des interfaces de type primaire.

L'interface WL0.1 est une interface de type secondaire.

A l'étape E311, le noeud GW obtient la liste de tous les équipements connus par les noeuds GW, EXT1 et EXT2.

Selon l'exemple de la Fig. 5, les équipements sont les suivants : les ponts BRLAN1 et BR_GUEST1 du noeud EXT1, les ponts BRLAN2 et BR_GUEST2 du noeud EXT2, les stations PC1 à PC6.

La liste est par exemple obtenue à partir de la table ARP (« Address Resolution Protocol »).

A l'étape E312, le noeud GW obtient une liste qui, pour tous les équipements, identifie les équipements compatibles ou non ainsi que les stations.

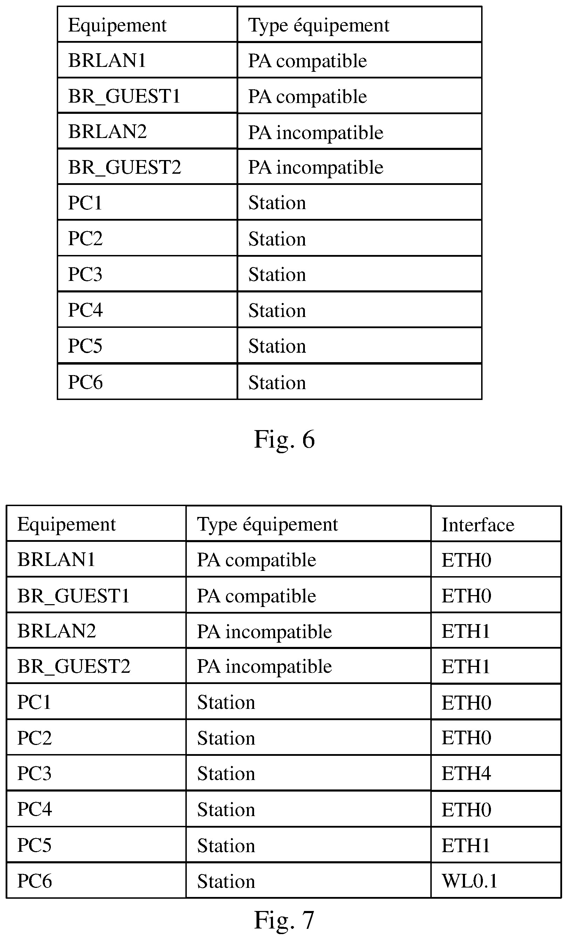

Selon l'exemple de la Fig. 6, les ponts BRLAN1 et BR_GUEST1 du noeud EXT1 comportent des interfaces point d'accès PA compatibles, les ponts BRLAN2 et BR_GUEST2 du noeud EXT2 comportent des interfaces point d'accès PA qui ne sont pas compatibles et les stations sont PC1 à PC6.

A l'étape E313, le noeud GW complète la liste qui, pour tous les équipements, identifie les équipements compatibles ou non ainsi que les stations en identifiant l'interface réseau du noeud GW permettant de communiquer avec les équipements.

Selon l'exemple de la Fig. 7, les ponts BRLAN1 et BR_GUEST1 du noeud EXT1 sont compatibles et l'interface ETH0 du noeud GW permet de communiquer avec ceux-ci. Les ponts BRLAN2 et BR_GUEST2 du noeud EXT sont incompatibles et l'interface ETH1 du noeud GW permet de communiquer avec ceux-ci. L'interface ETH0 du noeud GW permet de communiquer avec les stations PC1, PC2 et PC4

L'interface ETH4 du noeud GW permet de communiquer avec la station PC3, l'interface ETH1 du noeud GW permet de communiquer avec la station PC5 et l'interface WL0.1 du noeud GW permet de communiquer avec la station PC6.

A l'étape E314, le noeud GW détermine une table décrivant pour chacune de ses interfaces réseau son appartenance au sous-réseau d'acheminement ou au sous-réseau frontal.

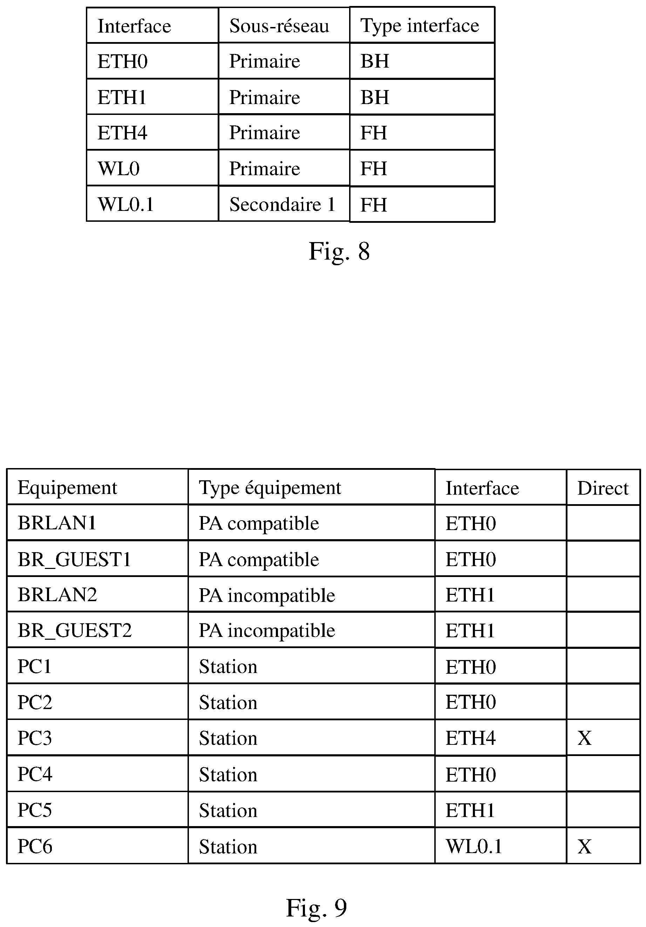

Selon l'exemple de la Fig. 8, les interfaces réseau ETH0, ETH1 sont des interfaces primaires appartenant au réseau d'acheminement BH, l'interface réseau ETH4 est une interface du sous-réseau primaire appartenant au réseau frontal FH, l'interface réseau WL0 est une interface du sous-réseau primaire appartenant au réseau frontal et l'interface réseau WL0.1 est une interface du réseau secondaire appartenant au réseau frontal.

A l'étape E315, le noeud GW détermine une table décrivant pour chaque équipement s'il est physiquement lié à une interface du réseau frontal du noeud GW.

Ainsi, selon l'exemple de la Fig. 9, les stations PC3 et PC6 sont connectées physiquement ou directement, tel qu'illustré par la colonne « Direct » de la Fig. 9, à un réseau frontal du noeud GW respectivement par l'interface réseau ETH4 et WL0.1.

A l'étape E316, le noeud GW détermine une table décrivant pour chaque station si elle est connectée physiquement à une interface d'un noeud.

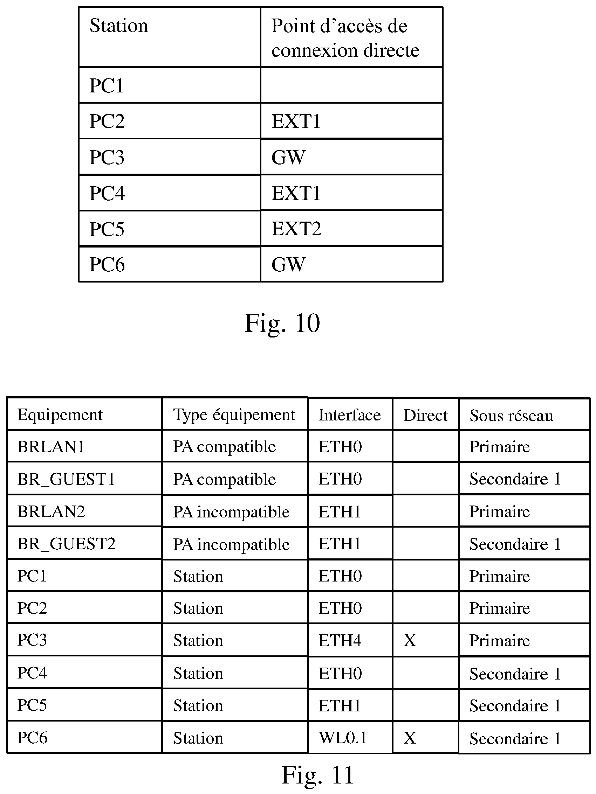

Ainsi, selon l'exemple de la Fig. 10, la station PC1 n'est pas connectée physiquement à une interface réseau d'un noeud.

La station PC2 est connectée physiquement à une interface réseau du noeud GW, la station PC3 est connectée physiquement à une interface réseau du noeud GW, la station PC4 est connectée physiquement à une interface réseau du noeud EXT1, la station PC5 est connectée physiquement à une interface réseau du noeud EXT2 et la station PC6 est connectée physiquement à une interface réseau du noeud GW.

A l'étape E317, le noeud GW détermine la topologie du réseau local.

Selon l'exemple de la Fig. 11, le pont BRLAN1 est un pont d'un noeud compatible, communiquant avec le noeud GW sur l'interface réseau ETH0 et fait partie du sous-réseau primaire. Le pont BR_GUEST1 est un pont d'un noeud compatible, communiquant avec le noeud GW sur l'interface réseau ETH0 et fait partie du sous-réseau secondaire. Le pont BRLAN2 est un pont d'un noeud incompatible, communiquant avec le noeud GW sur l'interface réseau ETH1 et fait partie du sous-réseau primaire. Le pont BR_GUEST2 est un pont d'un noeud incompatible, communiquant avec le noeud GW sur l'interface réseau ETH1 et fait partie du sous-réseau primaire. La station PC1 communique avec le noeud GW sur l'interface réseau ETH0 et fait partie du sous-réseau primaire. La station PC2 communique avec le noeud GW sur l'interface réseau ETH0 et fait partie du sous-réseau primaire. La station PC3 communique avec le noeud GW sur l'interface réseau ETH4, fait partie du sous-réseau primaire et est directement connectée au noeud GW. La station PC4 communique avec le noeud GW sur l'interface réseau ETH0 et fait partie du sous-réseau secondaire. La station PC5 communique avec le noeud GW sur l'interface réseau ETH1 et fait partie du sous-réseau secondaire. La station PC6 communique avec le noeud GW sur l'interface réseau WL0.1, fait partie du sous-réseau secondaire et est physiquement ou directement connectée au noeud GW.

Dans l'exemple de la Fig. 3b, le noeud GW exécute les étapes E310 à E317.

En variante, certaines des étapes E310 à E317 sont optionnelles. Par exemple, certaines de ces étapes peuvent avoir été exécutées lors d'une précédente mise en oeuvre du procédé de détermination d'une topologie du réseau local selon un mode de réalisation, et le résultat de ces étapes respectives peut avoir été sauvegardé par le noeud GW.

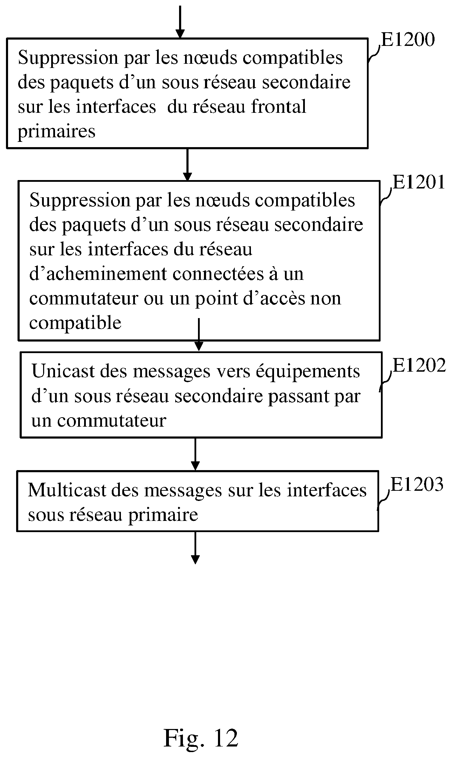

La Fig. 12 illustre un exemple d'un algorithme d'application de règles de filtrage selon un mode de réalisation.

A l'étape E1200, chaque noeud compatible supprime les paquets de diffusion comportant une information identifiant un sous-réseau secondaire sur les interfaces du sous-réseau primaire du réseau frontal.

A l'étape E1201, chaque noeud compatible supprime les paquets de diffusion comportant au moins une information identifiant un sous-réseau secondaire, par exemple au moins une information identifiant un réseau virtuel, sur les interfaces du sous-réseau d'acheminement reliées à un commutateur et/ou à un noeud incompatible.

Les paquets de diffusion comportant au moins une information identifiant un sous-réseau secondaire sont effectivement dans le sous-réseau secondaire, à destination du sous-réseau secondaire et la au moins une information identifiant un sous-réseau secondaire est par exemple une encapsulation du réseau virtuel qui permet de faire l'isolation des différents réseaux entre eux.

A l'étape E1202, chaque noeud compatible transforme les paquets de diffusion à destination d'équipements d'un sous-réseau secondaire pour lesquels le chemin depuis l'émetteur passe par un commutateur ou un noeud incompatible en paquets unicast.

A l'étape E1203, chaque noeud compatible maintient l'émission en multicast des messages de diffusion comportant une information identifiant un sous-réseau secondaire sur les interfaces réseau primaire ou vers le ou les noeuds compatibles.

En variante, lorsque le réseau local comporte au moins un noeud incompatible ou un commutateur, les messages diffusés émis dans les sous-réseaux secondaires sont transformés en messages unicast au niveau de chaque noeud compatible.

En variante, seule une ou certaines des étapes décrites en association avec la Fig. 12 sont réalisées lors de l'application de règles de filtrage.

Par exemple, le noeud GW transforme tous les paquets diffusés en multicast en messages unicast à destination des stations PC4, PC5 et PC6 et des ponts BR_GUEST1 et BR_GUEST2.

Ainsi, un paquet diffusé sur l'interface BR_GUESTG est remplacé par l'émission de quatre paquets unicast. Il n'y a plus aucun paquet diffusé (multicast) émis sur l'interface BR_GUESTG.

La transformation de tous les paquets diffusés en messages unicast à destination des stations PC4, PC5 et PC6 peut être effectuée au niveau des interfaces réseau auxquelles sont connectés les stations PC4, PC5 et PC6.

Il est à remarquer ici que, lorsque le réseau local ne comporte que des noeuds compatibles et aucun commutateur, chaque noeud compatible supprime les paquets de diffusion possédant une information identifiant un sous-réseau secondaire sur les interfaces primaires du sous-réseau d'acheminement.

## Revendications

1. Procédé de gestion de messages diffusés dans un réseau local comprenant des noeuds permettant une extension de couverture de communication sans fil et des stations, les noeuds permettant une extension de couverture étant reliés entre eux par un sous-réseau d'acheminement, au moins un noeud permettant une extension de couverture de communication sans fil émettant au moins un réseau sans fil appelé réseau frontal sur lequel se connectent les stations, le réseau local comprenant un sous-réseau primaire et un sous-réseau secondaire, le sous-réseau primaire étant un sous-réseau auquel appartiennent les liens du réseau d'acheminement et les noeuds, le sous-réseau secondaire étant un sous-réseau composé d'au moins une station et qui est isolé du reste du réseau local par un réseau virtuel, **caractérisé en ce que** le procédé comporte les étapes, exécutées par un noeud apte à appliquer des règles de filtrage, de :
- commande (E300) d'une analyse de la topologie du réseau local,
- détermination (E301), à partir de la topologie du réseau local, de règles de filtrage à appliquer,
- application (E302) des règles de filtrages déterminées sur les paquets diffusés comportant au moins une information identifiant le réseau virtuel.

2. Procédé selon la revendication 1, **caractérisé en ce que** l'analyse de la topologie du réseau comporte une détermination de la présence d'un noeud inapte à appliquer les règles de filtrage et/ou de la présence d'un commutateur connecté au sous-réseau d'acheminement.

3. Procédé selon la revendication 2, **caractérisé en ce que** l'application des règles de filtrage à appliquer se décompose en sous-étapes de :
- suppression des paquets de diffusion comportant une information identifiant un sous-réseau secondaire sur les interfaces du sous-réseau primaire du réseau frontal,
- suppression des paquets de diffusion comportant une information identifiant un sous-réseau secondaire sur les interfaces du sous-réseau d'acheminement reliées à un commutateur et/ou à un noeud incompatible,
- transformation des paquets de diffusion à destination d'équipements d'un sous-réseau secondaire pour lesquels le chemin depuis l'émetteur passe par un commutateur ou un noeud incompatible en paquets unicast.

4. Procédé selon la revendication 2, **caractérisé en ce que** si le réseau local ne comporte que des noeuds aptes à appliquer les règles de filtrage et aucun commutateur, chaque noeud compatible supprime les paquets de diffusion possédant une information identifiant un sous-réseau secondaire sur les interfaces primaires du sous-réseau d'acheminement.

5. Procédé selon la revendication 2, **caractérisé en ce que** l'application des règles de filtrage à appliquer se décompose en sous-étape de :
- transformation des messages diffusés émis dans les sous-réseaux secondaires en messages unicast au niveau de chaque noeud compatible.

6. Procédé selon l'une quelconque des revendications précédentes, **caractérisé en ce que** la détermination de la topologie du réseau se décompose en sous-étapes de :
- génération d'une table représentant le sous-réseau auquel appartiennent chaque interface et chaque pont d'un noeud,
- génération d'une table représentant la liste des équipements du réseau local,
- génération d'une table représentant le type de chaque équipement du réseau local,
- génération d'une table permettant de déterminer l'interface de connexion de chaque équipement du réseau local,
- génération d'une table décrivant, pour chaque interface, son appartenance au sous-réseau d'acheminement ou au sous-réseau frontal,
- génération d'une table décrivant pour chaque équipement s'il est physiquement lié à une interface du réseau frontal,
- génération d'une table décrivant pour chaque station si elle est connectée physiquement à une interface d'un noeud.

7. Procédé selon l'une quelconque des revendications précédentes, **caractérisé en ce que** le procédé est exécuté par un noeud appelé passerelle résidentielle qui fournit un accès à un réseau Internet.

8. Dispositif de gestion de messages diffusés dans un réseau local comprenant des noeuds permettant une extension de couverture de communication sans fil et des stations, les noeuds permettant une extension de couverture étant reliés entre eux par un sous-réseau d'acheminement, au moins un noeud permettant une extension de couverture de communication sans fil émettant au moins un réseau sans-fil appelé réseau frontal sur lequel se connectent les stations, le réseau local comprenant un sous-réseau primaire et un sous-réseau secondaire, le sous-réseau primaire étant un sous-réseau auquel appartiennent les liens du réseau d'acheminement et les noeuds, le sous-réseau secondaire étant un sous-réseau composé d'au moins une station et qui est isolé du reste du réseau local par un réseau virtuel, **caractérisé en ce que** le dispositif est compris dans un noeud apte à appliquer des règles de filtrage et comporte :
- des moyens de commande d'une analyse de la topologie du réseau local,
- des moyens de détermination à partir de la topologie du réseau local de règles de filtrage à appliquer,
- des moyens d'application des règles de filtrage déterminées sur les paquets diffusés comportant au moins une information identifiant le sous-réseau secondaire.

9. Un produit programme d'ordinateur **caractérisé en ce qu'**il comprend des instructions pour implémenter, par un noeud, le procédé selon l'une quelconque des revendications 1 à 7, lorsque ledit programme est exécuté par un processeur d'un noeud.

10. Un support de stockage **caractérisé en ce qu'**il stocke un programme d'ordinateur comprenant des instructions pour implémenter, par un noeud, le procédé selon l'une quelconque des revendications 1 à 7, lorsque ledit programme est exécuté par un processeur d'un noeud.
